# EUROPÄISCHE PATENTSCHRIFT

(11) **EP 3 333 554 B1**
(45) Veröffentlichungstag und Bekanntmachung des Hinweises auf die Patenterteilung: **23.10.2019**
(21) Anmeldenummer: 17001903.8
(22) Anmeldetag: 22.11.2017
(51) Int. Cl.: G01F 23/74

(54) **VORRICHTUNG ZUM ANZEIGEN UND/ODER KONTROLLIEREN VON FLUIDZUSTÄNDEN**
DEVICE FOR DISPLAYING AND/OR CONTROLLING FLUID STATES
DISPOSITIF DESTINÉ À AFFICHER ET/OU À RÉGULER L'ÉTAT D'UN FLUIDE

(30) Priorität: 10.12.2016 DE 102016014778
(43) Veröffentlichungstag der Anmeldung: 13.06.2018
(73) Patentinhaber: HYDAC Accessories GmbH, 66280 Sulzbach/Saar (DE)
(72) Erfinder: Käfer, Jürgen, 66578 Schiffweiler (DE); Hanus, Markus, 66386 St. Ingbert (DE)
(74) Vertreter: Bartels und Partner, Patentanwälte

(56) Entgegenhaltungen:
- EP-A1- 1 046 888
- WO-A1-01/40587
- DE-A1-102012 015 009
- DE-U1- 9 307 564
- US-A- 3 849 770
- US-A- 4 046 977

## Beschreibung

Die Erfindung betrifft eine Vorrichtung zum Anzeigen und/oder Kontrollieren von Fluidzuständen mit den Merkmalen im Oberbegriff von Anspruch 1.

Vorrichtungen dieser Art sind bekannt, vergleiche DE 199 16 953 A1. Derartige Vorrichtungen, die auch als Flüssigkeitsstandskontrolle (FSK) bezeichnet werden, dienen der Anzeige des Niveaus einer Flüssigkeit innerhalb eines Behälters oder Tanks, wobei die Vorrichtung außerhalb des Behälters angebracht, jedoch über mindestens einen Fluidanschluss mit diesem in der Art von kommunizierenden Röhren verbunden ist. Bei einer solchen Vorrichtung kann der jeweils aktuelle Füllstand optisch, beispielsweise durch visuelles Beobachten der Lage des Schwimmerkörpers, angezeigt werden, oder es kann durch die einen Reed-Schalter enthaltende Anzeigeeinrichtung ein elektrisches Schaltsignal in der Weise erzeugt werden, dass ein im Schwimmerkörper enthaltender Magnet bei einer vorgegebenen Schwimmerposition mit seinem Magnetfeld einen Schaltvorgang des Reed-Schalters auslöst. Beim Auftreten des Signals können die bei Erreichen des betreffenden Füllstands notwendigen Aktionen manuell oder automatisch vorgenommen werden.

Als Fluide, die mittels derartiger Vorrichtungen angezeigt und/oder kontrolliert werden sollen, kommen insbesondere Druckflüssigkeiten in Frage, wie Mineralöl nach DIN 51524, Teile 1 und 2, Kraftstoffe, Wasser-Öl-Emulsionen und synthetische Flüssigkeiten, wie Hydraulikflüssigkeiten. Für die visuelle Anzeige des jeweils aktuellen Füllstands kann das Steigrohr als Glas- oder Plexiglasrohr ausgebildet sein, so dass die Position des Schwimmerkörpers von einem Betrachter beobachtet werden kann.

Bei der oben erwähnten, bekannten Vorrichtung weist der Anschlusskörper als Träger für den Reed-Schalter ein Oberteil auf, das mit dem unteren Teil des Anschlusskörpers mittels Ultraschallschweißung verbunden ist, wobei der Reed-Schalter an der Oberseite des Oberteils, und damit innerhalb des Steigrohrs, freiliegt. Die elektrischen Anschlussleitungen für den Reed-Schalter sind über fluchtende Kanäle von Anschlusskörper-Oberteil und Anschlusskörper-Unterteil hindurchgeführt, verlaufen also durch den Schweißbereich zwischen Ober- und Unterteil hindurch. Die Schweißverbindung muss daher derart ausgeführt werden, dass der Durchgang für die Anschlussleitungen freibleibt, diese gleichzeitig aber an der Schweißstelle abgedichtet sind. Die Herstellung des Anschlusskörpers gestaltet sich daher verhältnismäßig aufwendig.

Die US 3 849 770 beschreibt eine Vorrichtung zum Anzeigen und/oder Kontrollieren von Fluidzuständen gemäß dem Oberbegriff von Anspruch 1, mit mindestens einem Fluidanschluss, der über einen Anschlusskörper in ein Steigrohr mündet, in dem ein sich auf das Fluidniveau einstellender Schwimmerkörper entlang einer Verfahrachse bewegbar geführt ist, wobei eine die Position des Schwimmerkörpers erkennende Anzeigeeinrichtung einen Reed-Schalter aufweist, der bei einem vorgegebenen Fluidniveau einen Schaltvorgang bei einer elektrischen Schalteinrichtung auslöst.

Eine weitere Vorrichtung zum Anzeigen und/oder Kontrollieren von Fluidzuständen geht aus der EP 1 046 888 A1 hervor.

Ausgehend von diesem Stand der Technik stellt sich die Erfindung die Aufgabe, eine Vorrichtung der eingangs genannten Gattung zur Verfügung zu stellen, die sich bei einfacher und rationell herstellbarer Bauweise durch ein günstiges Betriebsverhalten auszeichnet.

Erfindungsgemäß ist diese Aufgabe durch eine Vorrichtung gelöst, die die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass der Anschlusskörper einteilig ausgebildet ist und einen Kanal enthält, der, bezogen auf die Verfahrachse des Schwimmerkörpers, in schräger Richtung zur oberen Begrenzung des Anschlusskörpers hin verläuft, an seinem der oberen Begrenzung des Anschlusskörpers eng benachbarten Ende geschlossen ist und den Reed-Schalter in an dieses geschlossene Ende angrenzender Position aufnimmt. Bei der einteiligen Ausbildung des Anschlusskörpers entfällt der Aufwand für die Herstellung eines Oberteils und den Ultraschall-Schweißvorgang und das damit verbundene Risiko der Bildung von Undichtigkeiten. Durch die Anordnung des Reed-Schalters in einem Kanal, der an dem oberen, also an das Fluid im Steigrohr angrenzenden Ende geschlossen ist, ist der Reed-Schalter vom Fluid entkoppelt, was ein besonders sicheres Betriebsverhalten ermöglicht.

Mit Vorteil kann die Anordnung so getroffen sein, dass der Anschlusskörper die Form eines Blocks mit im Abstand voneinander in parallelen Ebenen verlaufenden Seitenwänden aufweist, wobei der schräge Kanal mit einem offenen Ende von einer Seitenwand ausgeht. Mit geringem Montageaufwand ist dadurch der Reed-Schalter vom an der Seite des Anschlusskörpers gelegenen offenen Ende des Kanals her einführbar und einbaubar.

Bei vorteilhaften Ausführungsbeispielen weist der Anschlusskörper zwischen den Seitenwänden einen zentral gelegenen, zu deren Ebenen parallel verlaufenden Fluiddurchgang auf, wobei im Bereich zwischen Fluiddurchgang und der die Mündung des schrägen Kanals aufweisenden Seitenwand ein zu dieser paralleler Zweigkanal verläuft, der mit seinem oberen Ende in den schrägen Kanal einmündet und am unteren Ende des Anschlusskörpers offen ist. Dadurch sind die elektrischen Anschlussleiter des Reed-Schalters innerhalb des Blocks des Anschlusskörpers über den Zweigkanal zur Unterseite des Anschlusskörpers und aus diesem heraus verlegbar.

Mit Vorteil kann die Anordnung derart getroffen sein, dass zwischen Fluiddurchgang und oberer Begrenzung des Anschlusskörpers ein Fluidverbindungskanal gebildet ist, der entlang der Seitenwand verläuft, die der Seitenwand gegenüberliegt, an der sich die Mündung des schrägen Kanals befindet. Bei dieser seitlichen Versetzung des Verbindungskanals befindet sich dessen Mündung zum Steigrohr an der oberen Begrenzung des Anschlusskörpers neben dem geschlossenen Ende des den Reed-Schalter aufnehmenden Kanals.

Bei dieser Lagebeziehung zwischen der Mündung des Verbindungskanals und dem geschlossenen Ende des schrägen Kanals lässt sich die obere Begrenzung des Anschlusskörpers durch das Ende eines zapfenartigen Ansatzes desselben ausbilden, der eine den passenden Eingriff in das Ende des Steigrohrs ermöglichende Außenform besitzt und aus einer ebenen, für die Anlage des Endes des Steigrohrs dienenden Fläche des Anschlusskörpers vorspringt. Bei einem oval ausgebildeten Steigrohr ergibt sich ein entsprechend ovaler Umriss des Ansatzes, an dem eine umfängliche Nut ausgebildet sein kann, die einen Dichtring aufnimmt, der die Abdichtung des Steigrohrs am Anschlusskörper bildet.

Mit besonderem Vorteil kann der aus einem Kunststoffmaterial spritzgegossene Anschlusskörper an seiner Unterseite einen zentral gelegenen Sitz für eine metallische Gewindehülse aufweisen, die ein Innengewinde zur Bildung einer Verschraubung mit einem Endkörper aufweist, der Kontaktelemente für die elektrische Verbindung mit dem Reed-Schalter enthält.

Des Weiteren kann die Anordnung mit Vorteil so getroffen sein, dass die beidseits des Fluiddurchgangs des Anschlusskörpers befindlichen Seitenwände ebenflächig sind und an einer dem unteren Ende benachbarten Stufe in nach außen versetzte vorspringende Wandabschnitte übergehen, die eine Einfassung für einen zwischen Anschlusskörper und Endkörper eingelegten, elastomeren Ringkörper bilden. Dieser kann mit Vorteil derart gestaltet sein, dass er mit einem aus der Ringebene vorstehenden Umfangsrand einen zugewandten Endabschnitt des Endkörpers umfasst. In Verbindung mit der am Anschlusskörper gebildeten Einfassung für den Ringkörper ist so die Position des Ringkörpers durch gebildete Formschlüsse eindeutig festgelegt, was den Montagevorgang erleichtert.

Nachstehend ist die Erfindung anhand eines in der Zeichnung dargestellten Ausführungsbeispiels im Einzelnen erläutert. Es zeigen:
- Fig. 1: eine explosionsartig auseinandergezogen gezeichnete Darstellung eines Ausführungsbeispiels der erfindungsgemäßen Vorrichtung;
- Fig. 2: eine Vorderansicht des Ausführungsbeispiels;
- Fig. 3: einen Längsschnitt des Ausführungsbeispiels entsprechend der Schnittlinie III-III von Fig. 2;
- Fig. 4: eine perspektivische Schrägansicht des gesondert dargestellten Anschlusskörpers des Ausführungsbeispiels der erfindungsgemäßen Vorrichtung, gesehen auf die Oberseite;
- Fig. 5: eine Seitenansicht des Anschlusskörpers; und
- Fig. 6: einen Vertikalschnitt des Anschlusskörpers entsprechend der Schnittlinie VI-VI von Fig. 5.

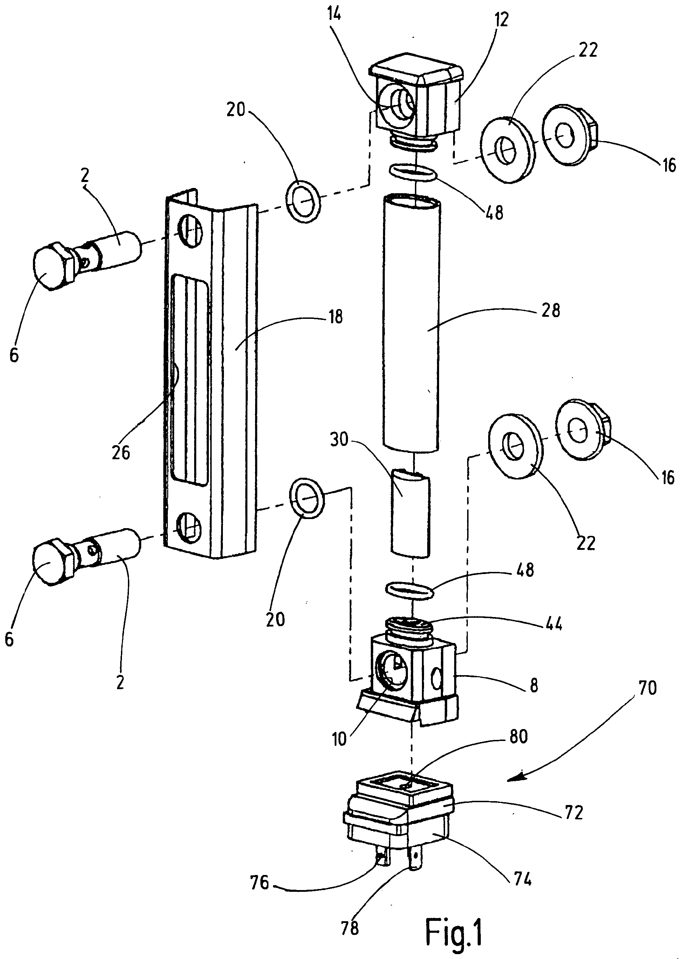

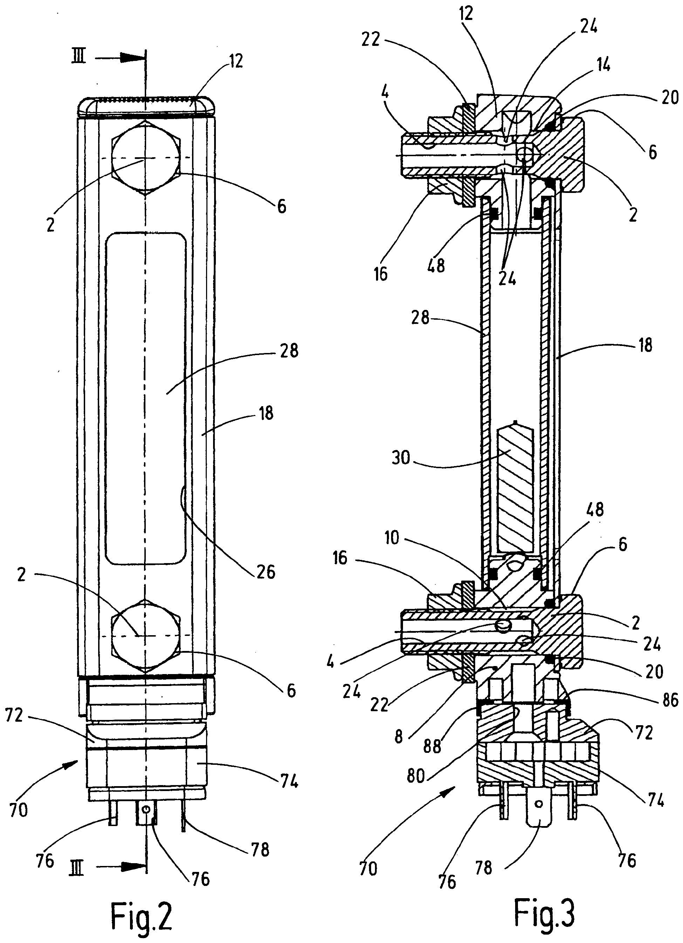

Das Ausführungsbeispiel weist in der bei Flüssigkeitsstandskontrollen (FSK) bekannten Weise Fluidanschlüsse in Form von Hohlschrauben 2 auf, deren koaxiale Innenbohrung 4 (Fig. 3), die an der vom Schraubenkopf 6 abgewandten Seite offen ist, mit einem nicht gezeigten Behälter oder Tank in Fluidverbindung ist. Die in den Fig. 1 bis 3 untenliegende Hohlschraube 2 durchgreift einen in einem Anschlusskörper 8 gebildeten Fluiddurchgang 10, und die obere Hohlschraube 2 durchgreift einen in einem oberen Verbindungskörper 12 gebildeten Fluiddurchgang 14. Mit einer Mutter 16, die auf dem dem Kopf 6 entgegengesetzten Gewindeabschnitt jeder Hohlschraube 2 sitzt, ist ein Gehäuseteil 18 in Form einer U-Profilschiene an dem Anschlusskörper 8 und dem oberen Verbindungskörper 12 festgelegt, wobei das Gehäuseteil 18 über je einen O-Ring 20 am Anschlusskörper 8 und am oberen Verbindungskörper 12 abgedichtet ist und sich zwischen den Muttern 16 und dem Anschlusskörper 8 sowie dem Verbindungskörper 12 jeweils eine Flachdichtung 22 befinden. Die O-Ringe 20 und die Flachdichtung 22 bilden am unteren Anschlusskörper 8 und am oberen Verbindungskörper 12 jeweils die Abdichtung ihres Fluiddurchgangs 10 bzw. 14. In diese Fluiddurchgänge 10 und 14 münden jeweils Querbohrungen 24, die in der Innenbohrung 4 der Hohlschrauben 2 gebildet sind. Ein in der Frontseite des Gehäuseteils 18 ausgespartes Fenster 26 ermöglicht die Beobachtung eines Sichtbereichs eines Steigrohres 28 in Form eines Plexiglas- oder Glasrohres, das zwischen Anschlusskörper 8 und Verbindungskörper 12 verläuft, am unteren Anschlusskörper 8 mit dessen Fluiddurchgang 10 in Verbindung ist und am oberen Verbindungskörper 12 mit dessen Fluiddurchgang 14 in Verbindung ist.

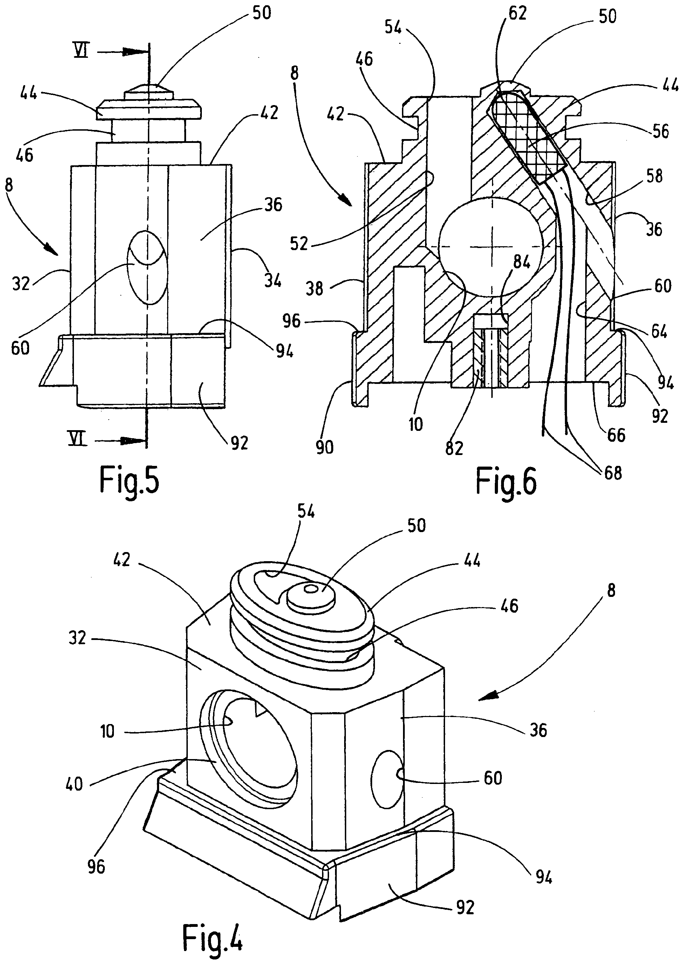

Die Fig. 4 bis 6 zeigen nähere Einzelheiten des Anschlusskörpers 8, der Bestandteil einer Anzeigeeinrichtung ist, die bei einer einem vorgegebenen Fluidniveau entsprechenden Position eines im Steigrohr 28 befindlichen Schwimmerkörpers 30 ein Anzeigesignal liefert. Der als einteiliges Bauteil aus einem thermoplastischen Kunststoffmaterial spritzgegossene Anschlusskörper 8 hat die Form eines Blocks mit Stirnwand 32 und Rückwand 34, die, von seitlichen Abschrägungen abgesehen, ebenflächig sind und zueinander parallel verlaufen. Im rechten Winkel dazu verlaufende Seitenwände 36 und 38 sind ebenfalls über einen Großteil ebenflächig. Der zugehörige Fluiddurchgang 10 erstreckt sich in zentraler Lage von Stirnwand 32 zu Rückwand 34, wobei der Bohrungsdurchmesser im an die Stirnwand 32 angrenzenden Endbereich derart erweitert ist, dass ein Sitz 40 für den O-Ring 20 gebildet ist, der sich zwischen Anschlusskörper 8 und dem Gehäuseteil 18 befindet, siehe Fig. 3. Im Bereich seiner Oberseite ist am Block des Anschlusskörpers 8 eine sich in einer Horizontalebene erstreckende Fläche 42 gebildet, aus der ein zapfenartiger Ansatz 44 nach oben vorsteht, der die obere Begrenzung des Anschlusskörpers 8 bildet. Der Ansatz 44 hat einen dem ovalen oder runden Querschnitt des Steigrohres 28 angepassten ovalen bzw. runden Umriss und weist eine umfängliche Ringnut 46 für einen O-Ring 48 auf. Bei dem Montagezustand, bei dem, wie in Fig. 3 gezeigt, das Steigrohr 28 mit seinem unteren Ende auf der Fläche 42 des Anschlusskörpers 8 anliegt und sich der Ansatz 44 ins Innere des Steigrohres erstreckt, bildet der O-Ring 48 die Abdichtung des Steigrohrs 28 am Ansatz 44. Das obere Ende des Steigrohres 28 liegt ebenfalls an einer Fläche des oberen Verbindungskörpers 12 an, wobei ein entsprechender O-Ring 48 die Abdichtung zwischen Steigrohr 28 und oberem Verbindungskörper 12 bildet. Ein knopfartiger Vorsprung 50, der an der oberen Begrenzung des Ansatzes 44 zentral gelegen ausgebildet ist, bildet für den sich in unterster Endposition befindlichen Schwimmerkörper 30 eine sehr begrenzte Berührungsfläche und verhindert dadurch ein Ankleben des in der unteren Endposition befindlichen Schwimmerkörpers 30.

Wie am deutlichsten in Fig. 6 gezeigt, ist für die Fluidverbindung zwischen Fluiddurchgang 10 des Anschlusskörpers 8 und dem Innenraum des Steigrohres 28 ein vertikaler Verbindungskanal 52 vorgesehen, der zur Achse der Bohrung des Fluiddurchgangs 10 in Richtung auf die in Fig. 6 links gelegene Seitenwand 38 versetzt ist, so dass er an der oberen Begrenzung des Ansatzes 44 an einer neben dem Vorsprung 50 gelegenen Stelle 54 mündet. Der Anschlusskörper 8 bildet, wie bereits erwähnt, Bestandteil der Anzeigeeinrichtung und bildet hierfür die Aufnahme für einen Reed-Schalter 56 (Fig. 6). Zu diesem Zweck ist ein Kanal 58 vorgesehen, der sich in Form einer Sackbohrung von einer Eingangsstelle 60 her, die sich an der in Fig. 4 und 6 rechts gelegenen Seitenwand 36 auf etwa deren halber Höhe befindet und sich im Schrägverlauf zur oberen Begrenzung des Ansatzes 44 hin erstreckt, wo der Kanal 58 in sehr kurzem Abstand von der oberen Begrenzung des Ansatzes 44 an der in Fig. 6 mit 62 bezeichneten Stelle geschlossen ist. In dem oberen Endbereich des schrägen Kanals 58 und unmittelbar an die geschlossene Stelle 62 angrenzend, ist der Reed-Schalter 56 aufgenommen und durch Vergussmasse gesichert. Wie ebenfalls aus Fig. 6 ersichtlich ist, mündet in den schrägen Kanal 58 an einer etwa auf halber Höhe der Seitenwand 36 gelegenen Stelle ein Zweigkanal 64 ein, der zwischen dieser Seitenwand 36 und dem Fluiddurchgang 10 in Vertikalrichtung verläuft und an der Unterseite 66 des Anschlusskörpers 8 offen ist. In dem Zweigkanal 64 sind die die elektrische Verbindung mit dem Reed-Schalter 56 bildende Leiter 68 verlegt.

An der Unterseite 66 des Anschlusskörpers 8 ist ein Endkörper 70 festgelegt, in den die über den Zweigkanal 64 zugeführten beiden elektrischen Leiter 68 des Reed-Schalters 56 eintreten. Der Endkörper 70 ist aus einem oberen Befestigungsteil 72 und einem unteren Klemmenteil 74 zusammengesetzt, von denen das Befestigungsteil 72 mit dem Anschlusskörper 8 verschraubbar ist und das untere Klemmenteil 74 Anschlussklemmen 76 für die Leiter 68 und eine Klemme 78 für eine Masseverbindung aufweist. Zur Bildung einer Verschraubung mit dem Anschlusskörper 8 weist das Befestigungsteil 72 eine Bohrung 80 auf, die für den Durchgriff einer (nicht dargestellten) Senkkopfschraube vorgesehen ist. Diese ist mit dem Innengewinde einer metallischen Gewindehülse 82 verschraubbar, die in einem an der Unterseite 66 des Anschlusskörpers 8 gebildeten Sitz 84 festgelegt ist. Wie Fig. 3 zeigt, ist zwischen Oberteil 72 des Endkörpers 70 und der Unterseite 66 des Anschlusskörpers 8 ein elastomerer Ringkörper 86 eingelegt, der mit einem aus der Ringebene nach unten vorstehenden Umfangsrand 88 den oberen Endabschnitt des Befestigungsteils 72 umfasst und dadurch am Befestigungsteil 72 positioniert ist. Außenseitig ist der Ringkörper 86 auf zwei einander gegenüberliegenden Seiten, nämlich auf den an die Seitenwände 36 und 38 des Anschlusskörpers 8 angrenzenden Seiten, von den vorspringenden Enden von Wandabschnitten 90 und 92 übergriffen und eingefasst, die an Stufen 94 und 96 der Seitenwände 36 bzw. 38 nach außen hin versetzt sind.

Für den Betrieb kann die Vorrichtung derart kalibriert sein, dass der Reed-Schalter 56 durch die Einwirkung des vom Magneten des Schwimmerkörpers 30 erzeugten Magnetfeldes schaltet, sobald der Schwimmerkörper 30 eine einem vorgegebenen minimalen Fluidniveau entsprechende Position einnimmt. Der Reed-Schalter 56 kann in bekannter Weise als Schließer, Öffner oder als Wechsler entsprechend der zugeordneten elektrischen Schalteinrichtung arbeiten, um bei Unterschreiten eines vorgegebenen Fluidniveaus ein Warnsignal zu erzeugen, aufgrund dessen betriebliche Maßnahmen, wie beispielsweise das Nachfüllen des Behälters, manuell veranlasst oder über die Schalteinrichtung automatisch ausgelöst werden. Wie üblich, ist über das Sichtfenster 26 im Gehäuseteil 18 die jeweilige Position des Schwimmerkörpers 30 und damit die Höhe des Fluidniveaus visuell beobachtbar.

## Patentansprüche

1. Vorrichtung zum Anzeigen und/oder Kontrollieren von Fluidzuständen, mit mindestens einem Fluidanschluss (2), der über einen Anschlusskörper (8) in ein Steigrohr (28) mündet, in dem ein sich auf das Fluidniveau einstellender Schwimmerkörper (30) entlang einer Verfahrachse bewegbar geführt ist, wobei eine die Position des Schwimmerkörpers (30) erkennende Anzeigeeinrichtung einen Reed-Schalter (56) aufweist, der bei einem vorgegebenen Fluidniveau einen Schaltvorgang bei einer elektrischen Schalteinrichtung auslöst, **dadurch gekennzeichnet, dass** der Anschlusskörper (8) einteilig ausgebildet ist und einen Kanal (58) enthält, der, bezogen auf die Verfahrachse des Schwimmerkörpers (30), in schräger Richtung zur oberen Begrenzung (44) des Anschlusskörpers (8) hin verläuft, an seinem der oberen Begrenzung (44) des Anschlusskörpers benachbarten Ende (62) geschlossen ist und den Reed-Schalter (56) in an dieses geschlossene Ende (62) angrenzender Position aufnimmt.

2. Vorrichtung nach Anspruch 1, **dadurch gekennzeichnet, dass** der Anschlusskörper (8) die Form eines Blocks mit im Abstand voneinander in parallelen Ebenen verlaufenden Seitenwänden (36, 38) aufweist und dass der schräge Kanal (58) mit seinem offenen Ende (60) von einer Seitenwand (36) ausgeht.

3. Vorrichtung nach Anspruch 1 oder 2, **dadurch gekennzeichnet, dass** der Anschlusskörper (8) zwischen den Seitenwänden (36, 38) einen zentral gelegenen, zu deren Ebenen parallel verlaufenden Fluiddurchgang (10) aufweist und dass im Bereich zwischen Fluiddurchgang (10) und der die Mündung des schrägen Kanals (58) aufweisenden Seitenwand (36) ein zu dieser paralleler Zweigkanal (64) verläuft, der mit seinem oberen Ende in den schrägen Kanal (56) einmündet und an der Unterseite (66) des Anschlusskörpers (8) offen ist.

4. Vorrichtung nach einem der vorstehenden Ansprüche, **dadurch gekennzeichnet, dass** zwischen Fluiddurchgang (10) und oberer Begrenzung (44) des Anschlusskörpers (8) ein Fluidverbindungskanal (52) gebildet ist, der entlang der Seitenwand (38) verläuft, die der Seitenwand (36) gegenüberliegt, an der sich die Mündung des schrägen Kanals (58) befindet.

5. Vorrichtung nach einem der vorstehenden Ansprüche, **dadurch gekennzeichnet, dass** die obere Begrenzung des Anschlusskörpers (8) durch das Ende eines zapfenartigen Ansatzes (44) desselben gebildet ist, der eine den passenden Eingriff in das Ende des Steigrohres (28) ermöglichende Außenform besitzt und aus einer ebenen, für die Anlage des Endes des Steigrohrs (28) dienenden Fläche (42) des Anschlusskörpers (8) vorspringt.

6. Vorrichtung nach einem der vorstehenden Ansprüche, **dadurch gekennzeichnet, dass** im Ansatz (44) eine umfängliche Nut (46) für die Aufnahme eines die Abdichtung des Steigrohres (28) am Anschlusskörper (8) bildenden Dichtringes (48) ausgebildet ist.

7. Vorrichtung nach einem der vorstehenden Ansprüche, **dadurch gekennzeichnet, dass** an der Unterseite (66) des aus Kunststoffmaterial spritzgegossenen Anschlusskörpers (8) ein zentral gelegener Sitz (84) für eine Gewindehülse (82) vorgesehen ist, die ein Innengewinde zur Bildung einer Verschraubung mit einem Endkörper (70) aufweist, der Kontaktelemente für die elektrische Verbindung mit dem Reed-Schalter (56) enthält.

8. Vorrichtung nach einem der vorstehenden Ansprüche, **dadurch gekennzeichnet, dass** die beidseits des Fluiddurchgangs (10) des Anschlusskörpers (8) befindlichen Seitenwände (36, 38) ebenflächig sind und an einer dem unteren Ende benachbarten Stufe (94, 96) in nach außen versetzte vorspringende Wandabschnitte (90, 92) übergehen, die eine Einfassung für einen zwischen Anschlusskörper (8) und Endkörper (70) eingelegten elastomeren Ringkörper (86) bilden.

9. Vorrichtung nach einem der vorstehenden Ansprüche, **dadurch gekennzeichnet, dass** der Ringkörper (86) mit einem aus der Ringebene vorstehenden Umfangsrand (88) den zugewandten Endabschnitt des Endkörpers (70) umfasst.

## Claims

1. Device for indicating and/or monitoring fluid states with at least one fluid connection (2), which opens via a connection body (8) into a riser tube (28), in which a float body (30) adjusting to the fluid level is movably guided along a travel axis, wherein an indicating device detecting the position of the float body (30) has a reed switch (56), which initiates a switching action in an electrical switching device at a predetermined fluid level, **characterised in that** the connection body (8) is integrally formed and contains a channel (58) which, in relation to the travel axis of the float body (30), extends in an oblique direction up to the upper limit (44) of the connection body (8), is closed at its end (62) adjacent to the upper limit (44) of the connection body (8) and receives the reed switch (56) in a position adjoining this closed end (62).

2. Device in accordance with claim 1, **characterised in that** the connection body (8) has the shape of a block with side walls (36, 38) extending at a distance apart in parallel planes and that the oblique channel (58) extends with its open end (60) from a side wall (36).

3. Device in accordance with claim 1 or 2, **characterised in that** the connection body (8) has a centrally located fluid passage (10) between the side walls (36, 38), parallel to their planes, and that, in the region between the fluid passage (10) and the side wall (36) containing the mouth of the oblique channel (58), a branch channel (64) extends parallel to this, whose upper end opens into the oblique channel (56) and whose lower end is open at the underside (66) of the connection body (8).

4. Device in accordance with one of the preceding claims, **characterised in that** a fluid connecting channel (52) is formed between fluid passage (10) and upper limit (44) of the connection body, which extends along the inside wall (38), which is opposite the side wall (36); on which the mouth of the oblique channel (58) is located.

5. Device in accordance with one of the preceding claims, **characterised in that** the upper limit of the connection body (8) is formed by the end of a pin-like extension (44) thereof, which has an external shape enabling the fitting engagement in the end of the riser tube (28) and projects from a flat surface (42) of the connection body (8) acting as mounting for the end of the riser tube (28).

6. Device in accordance with one of the preceding claims, **characterised in that** a circumferential channel (46) is provided in the extension (44) to receive a sealing ring (48) forming the seal of the riser tube (28) on the connection body (8).

7. Device in accordance with one of the preceding claims, **characterised in that** on the underside (66) of the connection body (8), injection moulded from a plastic material, a centrally located seat (84) is provided for a threaded bush (82), which has an internal thread to form a screwed connection to an end body (70), which contains the contact elements for the electrical connection with the reed switch (56).

8. Device in accordance with one of the preceding claims, **characterised in that** the side walls (36, 38) on either side of the fluid passage (10) of the connection body (8) are flat and pass at a step (94, 96) adjacent to the lower end into wall sections (90, 92) projecting outwards at a step (94, 96) adjacent to the lower end into wall sections (90, 92) displaced to project outwards, which form an enclosure for an elastomeric annular body (86) inserted between connection body (8) and end body (70).

9. Device in accordance with one of the preceding claims, **characterised in that** the ring body (86) with a circumferential edge (88) projecting from the ring plane comprises the end portion of the end body (70).

## Revendications

1. Dispositif d'affichage et/ou de contrôle d'états de fluide, comprenant au moins un raccord (2) pour du fluide, qui débouche par un corps (8) de raccord dans un tuyau (28) ascendant, dans lequel un corps (30) flottant, se réglant sur le niveau de fluide, est guidé avec possibilité de se déplacer suivant un axe de déplacement, dans lequel un dispositif d'affichage, reconnaissant la position du corps (30) flottant, a un interrupteur (56) de Reed, qui, à un niveau de fluide donné à l'avance, déclenche une opération de coupure dans un dispositif électrique de coupure, **caractérisé en ce que** le corps (8) de raccord est constitué d'une seule pièce et comporte un conduit (58), qui, par rapport à l'axe de déplacement du corps (30) flottant, s'étend dans une direction inclinée vers la démarcation (44) supérieure du corps (8) de raccord, est fermé à son extrémité (62) voisine de la démarcation (44) supérieure du corps de raccord et reçoit l'interrupteur (56) de Reed dans une position voisine de cette extrémité (62) fermée.

2. Dispositif suivant la revendication 1, **caractérisé en ce que** le corps (8) de raccord a la forme d'un bloc ayant des parois (36, 38) latérales s'étendant dans des plans parallèles à distance l'un de l'autre et **en ce que** le conduit (58) incliné sort, par son extrémité (60) ouverte, d'une paroi (36) latérale.

3. Dispositif suivant la revendication 1 ou 2, **caractérisé en ce que** le corps (8) de raccord a, entre les parois (36, 38) latérales, un passage (10) pour du fluide, disposé centralement et s'étendant parallèlement à leurs plans, et **en ce que**, dans la région entre le passage (10) pour du fluide et la paroi (36) latérale ayant l'embouchure du conduit (58) incliné, s'étend, parallèlement à celle-ci, un conduit (64) de dérivation, qui débouche, par son extrémité supérieure, dans le conduit (56) incliné et est ouvert du côté (66) inférieur du corps (8) de raccord.

4. Dispositif suivant l'une des revendication précédentes, **caractérisé en ce qu'**entre le passage (10) pour du fluide et la démarcation (44) supérieure du corps (8) de raccord, est formé un conduit (52) de liaison pour du fluide, qui s'étend le long de la paroi (38) latérale opposée à la paroi (36) latérale où se trouve l'embouchure du conduit (58) incliné.

5. Dispositif suivant l'une des revendications précédentes, **caractérisé en ce que** la démarcation supérieure du corps (8) de raccord est formée par l'extrémité d'un appendice (44) de type en tenon de celui-ci, qui possède une forme extérieure permettant une pénétration avec adaptation dans l'extrémité du tuyau (28) ascendant et qui fait saillie d'une surface (42), plane et servant à l'application de l'extrémité du tuyau (28) ascendant, du corps (8) de raccord.

6. Dispositif suivant l'une des revendications précédentes, **caractérisé en ce que**, dans l'appendice (44), est constituée une rainure (46) de pourtour pour recevoir une bague (48) d'étanchéité formant l'étanchéité du tuyau (28) ascendant sur le corps (8) de raccord.

7. Dispositif suivant l'une des revendications précédentes, **caractérisé en ce que**, du côté (66) inférieur du corps (8) de raccord mené par injection en matière plastique, est prévu un siège (84) disposé de manière centrale pour une douille (82) filetée, qui a un taraudage pour former un vissage avec une pièce (70) d'extrémité, qui contient des éléments de contact pour la liaison électrique avec l'interrupteur (56) Reed.

8. Dispositif suivant l'une des revendications précédentes, **caractérisé en ce que** les parois (36, 38) latérales, se trouvant des deux côtés du passage (10) pour du fluide du corps (8) de raccord, sont planes suivant un plan et se transforment, sur un palier (94, 96) voisin de l'extrémité inférieure, en des parties (90, 92) de paroi en saillie décalées vers l'extérieur, qui forment une bordure d'un corps (86) annulaire en élastomère inséré entre le corps (8) de raccord et le corps (70) d'extrémité.

9. Dispositif suivant l'une des revendications précédentes, **caractérisé en ce que** le corps (86) annulaire entoure, par un bord (88) périphérique en saillie du plan annulaire, la partie d'extrémité tournée vers lui du corps (70) d'extrémité.
